# EUROPEAN PATENT SPECIFICATION

(11) **EP 1 747 668 B1**
(45) Date of publication and mention of the grant of the patent: **17.09.2008**
(21) Application number: 05749528.5
(22) Date of filing: 17.05.2005
(51) Int. Cl.: H04N 5/44, H04N 5/60

(54) **APPARATUS AND METHOD FOR PROCESSING A PILOT SIGNAL**
VORRICHTUNG UND VERFAHREN ZUM VERARBEITEN EINES PILOTSIGNALS
APPAREIL ET PROCEDE DE TRAITEMENT D'UN SIGNAL PILOTE

(30) Priority: 20.05.2004 US 572929 P
(43) Date of publication of application: 31.01.2007
(73) Proprietor: Thomson Licensing, 92100 Boulogne-Billancourt (FR)
(72) Inventor: FILLIMAN, Paul, Dean, Indianapolis, Indiana 46236 (US); PUGEL, Michael, Anthony, Noblesville, Indiana 46060 (US)
(74) Representative: Ruellan-Lemonnier, Brigitte
(86) International application number: PCT/US2005/016991
(87) International publication number: WO 2005/117424

(56) References cited:
- US-A- 4 953 021
- US-A- 5 617 240
- US-B1- 6 411 659
- US-B1- 6 421 099
- PATENT ABSTRACTS OF JAPAN vol. 005, no. 141 (E-073), 5 September 1981 (1981-09-05) & JP 56 076619 A (FUJITSU LTD), 24 June 1981 (1981-06-24)

## Description

### BACKGROUND OF THE INVENTION

### Field of the Invention

The present invention generally relates to signal processing for an apparatus such as a television signal receiver, and more particularly, to an apparatus and method for processing a pilot signal that enables, among other things, proper generation of an L-R stereo difference signal.

### Background Information

Apparatuses such as television signal receivers and radios may use digital signal processing to generate certain signals including audio signals. Document US-A-5 617 240 describes a system that generates an amplitude modulated pilot signal which is processed in gain controlled LED amplification circuits alongside a signal component to determine the level of amplification being applied to the signal component. The pilot signal is mixed with a DC component to generate an AM pilot this signal is then mixed with the signal component or "useful signal" and both signals are then amplified in the same way. The amplified modulated pilot signal is then extracted from the useful signal by a filter and used in an automatic gain control loop. Such apparatuses may use a digital demodulation technique known as simple product demodulation to generate an L-R stereo difference signal. In order to properly generate an L-R stereo difference signal using simple product demodulation, it may be necessary to reconstruct an audio pilot signal for use in the simple product demodulation process. Moreover, it is preferable that this reconstructed pilot signal exhibit little variation in amplitude, and be symmetrical (i.e., include no DC component). If the amplitude of the reconstructed pilot signal varies too much, the L-R stereo difference may not be properly generated using simple product demodulation.

Heretofore, the problem of reconstructing a pilot signal to enable proper generation of an L-R stereo difference signal using simple product demodulation has not been adequately addressed. Accordingly, there is a need for an apparatus and method for processing a pilot signal which avoids the foregoing problem, and thereby enables, among other things, proper generation of an L-R stereo difference signal. The present invention addresses these and/or other issues.

### SUMMARY OF THE INVENTION

In accordance with an aspect of the present invention, an apparatus for processing a pilot signal is disclosed. According to an exemplary embodiment, the apparatus comprises means for providing the pilot signal, and processing means for processing the pilot signal to generate a first processed pilot signal having an AC component and a DC component. The processing means uses the DC component to control a signal parameter of the AC component and generate a second processed pilot signal.

In accordance with another aspect of the present invention, a method for processing a pilot signal is disclosed. According to an exemplary embodiment, the method comprises steps of receiving a pilot signal, processing the pilot signal to generate a first processed pilot signal having an AC component and a DC component, and using the DC component to control a signal parameter of the AC component and generate a second processed pilot signal.

In accordance with yet another aspect of the present invention, a television signal receiver is disclosed. According to an exemplary embodiment, the television signal receiver comprises a signal source operative to provide a pilot signal, and a pilot processing circuit operative to process the pilot signal to generate a first processed pilot signal having an AC component and a DC component. The pilot processing circuit uses the DC component to control a signal parameter of the AC component and generate a second processed pilot signal.

### BRIEF DESCRIPTION OF THE DRAWINGS

The above-mentioned and other features and advantages of this invention, and the manner of attaining them, will become more apparent and the invention will be better understood by reference to the following description of embodiments of the invention taken in conjunction with the accompanying drawings, wherein:
FIG. 1 is a block diagram of an apparatus according to an exemplary embodiment of the present invention;
FIG. 2 is a block diagram providing further details of the audio processing block of FIG. 1;
FIG. 3 is a pilot processing circuit according to an exemplary embodiment of the present invention;
FIG. 4 is a stereo detecting circuit according to an exemplary embodiment of the present invention; and
FIG. 5 is a flowchart illustrating steps according to an exemplary embodiment of the present invention.
The exemplifications set out herein illustrate preferred embodiments of the invention, and such exemplifications are not to be construed as limiting the scope of the invention in any manner.

### DESCRIPTION OF THE PREFERRED EMBODIMENTS

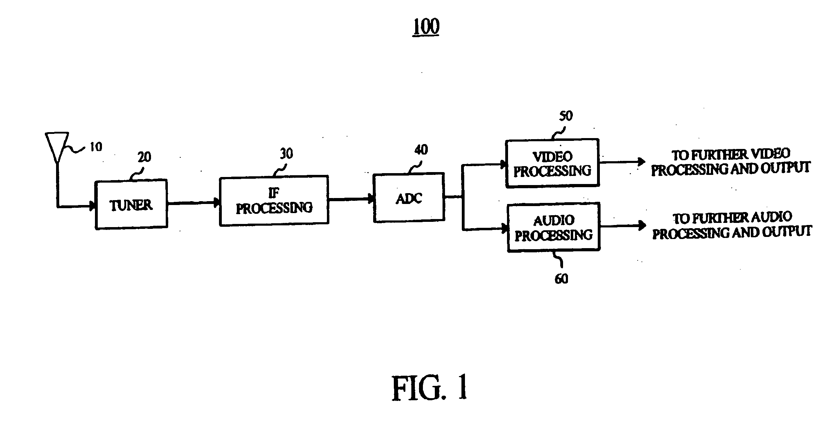

Referring now to the drawings, and more particularly to FIG. 1, a block diagram of an apparatus 100 according to an exemplary embodiment of the present invention is shown. As shown in FIG. 1, apparatus 100 comprises signal receiving means such as signal receiving element 10, tuning means such as tuner 20, intermediate frequency (IF) processing means such as IF processing block 30, analog-to-digital converting means such as analog-to-digital converter (ADC) 40, video processing means such as video processing block 50, and audio processing means such as audio processing block 60. Some of the foregoing elements of FIG. 1 may be embodied using integrated circuits (ICs), and some elements may for example be included on one or more ICs. For clarity of description, certain conventional elements associated with apparatus 100 such as certain control signals, power signals, clock signals and/or other elements may not be shown in FIG. 1. According to an exemplary embodiment, apparatus 100 is embodied as a television signal receiver, but may be embodied as another type of apparatus or device such as a radio.

Signal receiving element 10 is operative to receive a radio frequency (RF) signal from one or more signal sources such as terrestrial, cable, satellite, internet and/or other signal sources. According to an exemplary embodiment, signal receiving element 10 is embodied as an antenna, but may also be embodied as any type of signal receiving element such as an input terminal and/or other element.

Tuner 20 is operative to perform a signal tuning function. According to an exemplary embodiment, tuner 20 receives the RF input signal from signal receiving element 10, and performs the signal tuning function by filtering and frequency downconverting (i.e., single or multiple stage downconversion) the RF input signal to thereby generate an IF signal. The RF input signal and IF signal may include audio, video and/or data content, and may be of an analog modulation scheme (e.g., NTSC, PAL, SECAM, etc.) and/or a digital modulation scheme (e.g., ATSC, QAM, etc.).

IF processing block 30 is operative to process the IF signal provided from tuner 20 to thereby generate a processed IF signal. According to an exemplary embodiment, IF processing block 30 performs IF processing functions including filtering and amplifying functions to generate the processed IF signal. IF processing block 30 may for example include one or more individual surface acoustical wave (SAW) filters and amplifiers which respectively filter (e.g., remove undesired adjacent channel energy) and amplify the IF signal provided from tuner 20 to thereby generate the processed IF signal.

ADC 40 is operative to perform an analog-to-digital conversion function. According to an exemplary embodiment, ADC 40 converts the processed IF signal provided from IF processing block 30 from an analog format to a digital format to thereby generate a digital IF signal.

Video processing block 50 is operative to perform various video processing functions. According to an exemplary embodiment, video processing block 50 performs video processing functions including demodulation, decoding, and/or other video processing functions to thereby generate a processed video signal. As indicated in FIG. 1, the processed video signal output from video processing block 50 is provided for further video processing and output.

Audio processing block 60 is operative to perform various audio processing functions. According to an exemplary embodiment, audio processing block 60 performs audio processing functions including stereo sum processing, pilot processing, stereo difference processing, and secondary audio processing functions. Further details regarding audio processing block 60 will be provided later herein.

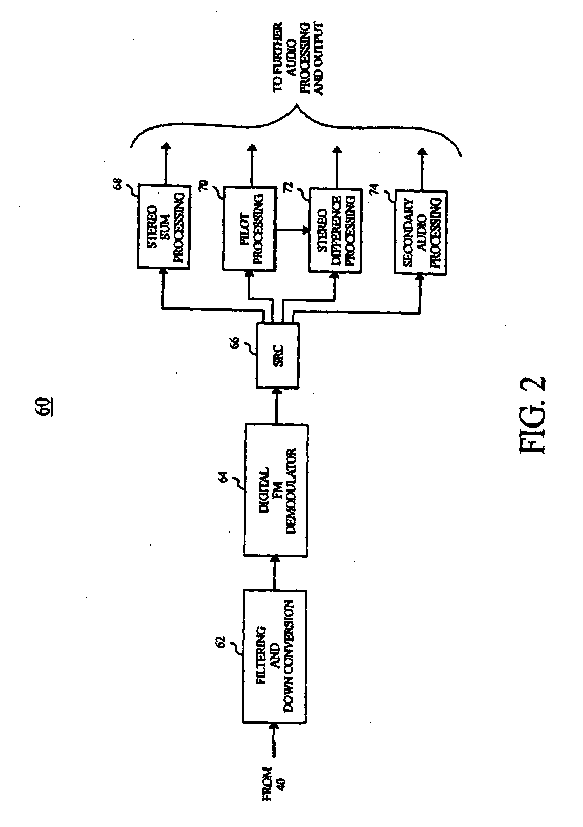

Referring to FIG. 2, a block diagram providing further details of audio processing block 60 of FIG. 1 is shown. As indicated in FIG. 2, audio processing block 60 comprises filtering and down conversion means such as filtering and down conversion block 62, digital demodulating means such as digital FM demodulator 64, sample rate conversion means such as sample rate converter (SRC) 66, stereo sum processing means such as stereo sum processing block 68, pilot processing means such as pilot processing block 70, stereo difference processing means such as stereo difference processing block 72, and secondary audio processing means such as secondary audio processing block 74. The foregoing elements of FIG. 2 may be embodied using ICs, and some elements may for example be included on one or more ICs. For clarity of description, certain conventional elements associated with audio processing block 60 such as certain control signals, power signals, clock signals and/or other elements may not be shown in FIG. 2.

Filtering and down conversion block 62 is operative to perform filtering and frequency down conversion functions. According to an exemplary embodiment, filtering and down conversion block 62 filters and frequency down converts the digital IF signal provided from ADC 40 to thereby generate a digital audio signal having a center frequency of approximately 4.5 MHz.

Digital FM demodulator 64 is operative to perform a digital FM demodulation function. According to an exemplary embodiment, digital FM demodulator 64 demodulates the digital audio signal provided from filtering and down conversion block 62 to thereby generate a demodulated digital audio signal including various audio component signals (e.g., stereo sum/difference signals, pilot signal, secondary audio signal).

SRC 66 is operative to perform a sample rate conversion function. According to an exemplary embodiment, SRC 66 converts the demodulated digital audio signal provided from digital FM demodulator 64 from a first sample rate to a second sample rate to thereby generate sample rate converted digital audio signal.

Stereo sum processing block 68 is operative to perform stereo sum processing functions. According to an exemplary embodiment, stereo sum processing block 68 filters the sample rate converted digital audio signal provided from SRC 66 to thereby provide an L+R stereo sum signal having a center frequency of approximately 14 kHz.

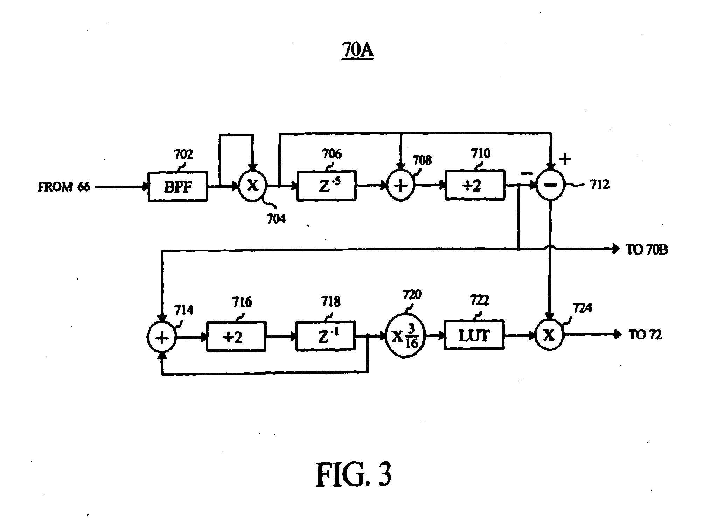

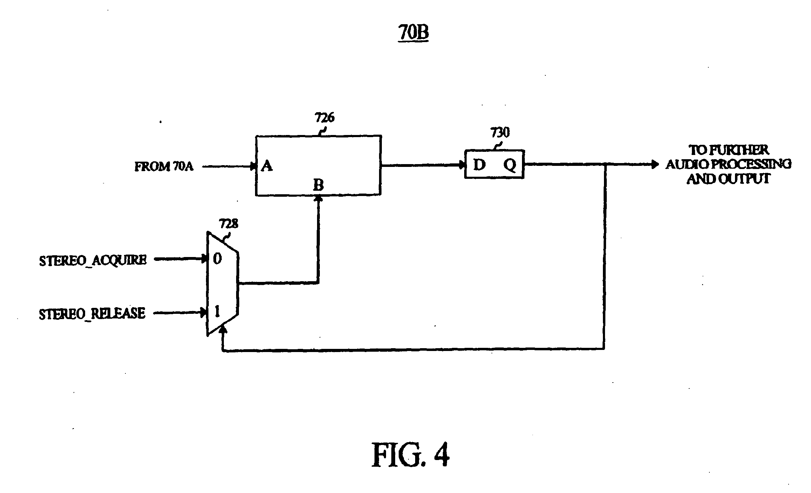

Pilot processing block 70 is operative to perform pilot processing functions. According to an exemplary embodiment, pilot processing block 70 includes a pilot processing circuit 70A shown in FIG. 3, and a stereo detecting circuit 70B shown in FIG. 4 that respectively perform pilot processing and stereo detection functions. Further details regarding pilot processing circuit 70A and stereo detecting circuit 70B will be provided later herein with reference to FIG. 3 and 4, respectively.

Stereo difference processing block 72 is operative to perform stereo difference processing functions. According to an exemplary embodiment, stereo difference processing block 72 filters the sample rate converted digital audio signal provided from SRC 66 to thereby provide a filtered signal having a center frequency of approximately 31.5 kHz. Also according to an exemplary embodiment, stereo difference processing block 72 includes demodulating means such as a digital demodulator that performs simple product demodulation by multiplying the 31.5 kHz filtered signal with a processed pilot signal provided from pilot processing block 70 to thereby generate an L-R stereo difference signal.

Secondary audio processing block 74 is operative to perform secondary audio processing functions. According to an exemplary embodiment, second audio processing block 74 processes the sample rate converted digital audio signal provided from SRC 66 to thereby generate a secondary audio signal. As indicated in FIG. 2, the signals generated by stereo sum processing block 68, pilot processing block 70, stereo difference processing block 72, and secondary audio processing block 74 described above are provided for further audio processing and output.

Referring to FIG. 3, a pilot processing circuit 70A according to an exemplary embodiment of the present invention is shown. As previously indicated herein, pilot processing circuit 70A of FIG. 3 is included in pilot processing block 70 of FIG. 2. As indicated in FIG. 3, pilot processing circuit 70A comprises filtering means such as band pass filter (BPF) 702, first multiplying means such as multiplier 704, first delay means such as delay unit 706, first adding means such as adder 708, first dividing means such as divider 710, subtracting means such as subtractor 712, second adding means such as adder 714, second dividing means such as divider 716, second delay means such as delay unit 718, second multiplying means such as multiplier 720, look-up table means such as look-up table (LUT) 722, and third multiplying means such as multiplier 724. According to an exemplary embodiment, the foregoing elements of FIG. 3 may be embodied using ICs, and some elements may for example be included on one or more ICs. For clarity of description, certain conventional elements associated with pilot processing circuit 70A such as certain control signals, power signals, clock signals and/or other elements may not be shown in FIG. 3.

BPF 702 is operative to filter the sample rate converted digital audio signal provided from SRC 66 to thereby provide a pilot signal having a center frequency of approximately 15.734 kHz. BPF 702 may for example be embodied as a high-Q filter with at least two poles. As referred to herein, the term "pilot signal" refers to any type of pilot signal, carrier signal and/or other reference signal used in any signal processing application. According to an exemplary embodiment described herein, however, the pilot signal will be described with reference to a digital audio processing application.

Multiplier 704 is operative to multiply the pilot signal provided from BPF 702 by itself (i.e., squaring the pilot signal) and thereby generate a first processed pilot signal. According to an exemplary embodiment, the first processed pilot signal includes an alternating current (AC) component and a direct current (DC) component. The first processed pilot signal may be represented as A*cos(wt)² = A/2*(1+cos(2wt)), where A/2 represents the DC component and cos(2wt) represents the AC component. As will be described later herein, pilot processing circuit 70A uses the DC component to control a signal parameter (e.g., gain/amplitude) of the AC component and thereby generate a second processed pilot signal having minimal amplitude variation. Moreover, the DC component may be used to detect if stereo is present.

Delay unit 706 is operative to delay the first processed pilot signal provided from multiplier 704 to thereby generate a delayed version of the first processed pilot signal. According to an exemplary embodiment, delay unit 706 delays the first processed pilot signal for a period equal to five clock cycles. The clock cycle frequency may be selected as a matter of design choice. Adder 708 is operative to add the first processed pilot signal provided from multiplier 704 to the delayed version of the first processed pilot signal provided from delay unit 706 and thereby generate a sum signal. Divider 710 is operative to divide the sum signal provided from adder 708 by a value of two and thereby generate a corresponding output signal. According to an exemplary embodiment, the output signal provided from divider 710 represents the DC component of the first processed pilot signal generated by multiplier 704. In FIG. 3, delay unit 706, adder 708, and divider 710 operate as a comb filter that isolates the DC component of the first processed pilot signal generated by multiplier 704.

Subtractor 712 is operative to subtract the output signal provided from divider 710 (i.e., the DC component of the first processed pilot signal) from the first processed pilot signal provided from multiplier 704 and thereby generate a corresponding output signal. According to an exemplary embodiment, the output signal of subtractor 712 represents the AC component of the first processed pilot signal generated by multiplier 704 with the DC component removed.

Adder 714 is operative to add the output signal provided from divider 710 (i.e., the DC component of the first processed pilot signal) to a delayed signal provided from delay unit 718 and thereby generate a sum signal. Divider 716 is operative to divide the sum signal provided from adder 714 by a value of two and thereby generate a corresponding output signal. Delay unit 718 is operative to delay the output signal provided from divider 716 and thereby generate the delayed signal that is provided back to adder 714. In FIG. 3, adder 714, divider 716, and delay unit 718 operate as an averaging filter that removes residual AC components from the DC component of the first processed pilot signal.

Multiplier 720 is operative to multiply the delayed signal provided from delay unit 718 by a fractional value of 3/16^{th} and thereby generate a multiplied signal. LUT 722 is operative to provide an output signal having a value based on the input DC value of the multiplied signal provided from multiplier 720. Table 1 below summarizes the relationship between the input DC value of the multiplied signal provided from multiplier 720 (see first and third columns of Table 1) and the value of the output signal provided from LUT 722 (see second and fourth columns of Table 1) according to an exemplary embodiment of the present invention.

**Table 1**

| **INPUT DC VALUE** | **LUT OUTPUT VALUE** | **INPUT DC VALUE (CONT.')** | **LUT OUTPUT VALUE (CONT.')** |
|---|---|---|---|
| 0 | 127 | 32 | 32 |
| 1 | 127 | 33 | 31 |
| 2 | 127 | 34 | 30 |
| 3 | 127 | 35 | 29 |
| 4 | 127 | 36 | 28 |
| 5 | 127 | 37 | 28 |
| 6 | 127 | 38 | 27 |
| 7 | 127 | 39 | 26 |
| 8 | 127 | 40 | 26 |
| 9 | 114 | 41 | 25 |
| 10 | 102 | 42 | 24 |
| 11 | 93 | 43 | 24 |
| 12 | 85 | 44 | 23 |
| 13 | 79 | 45 | 23 |
| 14 | 73 | 46 | 22 |
| 15 | 68 | 47 | 22 |
| 16 | 64 | 48 | 21 |
| 17 | 60 | 49 | 21 |
| 18 | 57 | 50 | 20 |
| 19 | 54 | 51 | 20 |
| 20 | 51 | 52 | 20 |
| 21 | 49 | 53 | 19 |
| 22 | 47 | 54 | 19 |
| 23 | 45 | 55 | 19 |
| 24 | 43 | 56 | 18 |
| 25 | 41 | 57 | 18 |
| 26 | 39 | 58 | 18 |
| 27 | 38 | 59 | 17 |
| 28 | 37 | 60 | 17 |
| 29 | 35 | 61 | 17 |
| 30 | 34 | 62 | 17 |
| 31 | 33 | 63 | 16 |

As indicated in Table 1 above, the value of the output signal provided from LUT 722 varies inversely based on the input DC value of the multiplied signal provided from multiplier 720. In this manner, the value of the output signal of LUT 722 increases when the input DC value of the multiplied signal provided from multiplier 720 decreases, and vice-versa.

Multiplier 724 is operative to multiply the output signal provided from subtractor 712 by the output signal provided from LUT 722 and thereby generate a second processed pilot signal. As previously indicated herein, the output signal of subtractor 712 represents the AC component of the first processed pilot signal generated by multiplier 704. Moreover, the output signal provided from LUT 722 is derived from the DC component of the first processed pilot signal generated by multiplier 704. Accordingly, the present invention uses the DC component of the first processed pilot signal to control the amplitude/gain of the AC component of the first processed pilot signal and thereby generate the second processed pilot signal with minimal amplitude variations. As indicated in FIG. 3, the second processed pilot signal generated by multiplier 724 is provided to stereo difference processing block 72 (see FIG. 2) where it is used to generate the L-R stereo difference signal. As previously indicated herein, stereo difference processing block 72 of FIG. 2 includes demodulating means such as a digital demodulator that performs simple product demodulation by multiplying a 31.5 kHz signal with the second processed pilot signal provided from multiplier 724 to thereby generate the L-R stereo difference signal. Since the gain/amplitude of the second processed pilot signal is controlled using the DC component of the first processed pilot signal, the present invention advantageously enables the L-R stereo difference signal to be properly generated using simple product demodulation.

Referring to FIG. 4, a stereo detecting circuit 70B according to an exemplary embodiment of the present invention is shown. As previously indicated herein, stereo detecting circuit 70B of FIG. 4 is included in pilot processing block 70 of FIG. 2. As indicated in FIG. 4, stereo detecting circuit 70B comprises comparing means such as comparator 726, multiplexing means such as multiplexer 728, and gating means such as D-type flip-flop 730. According to an exemplary embodiment, the foregoing elements of FIG. 4 may be embodied using ICs, and some elements may for example be included on one or more ICs. For clarity of description, certain conventional elements associated with stereo detecting circuit 70B such as certain control signals, power signals, clock signals and/or other elements may not be shown in FIG. 4.

Comparator 726 is operative to compare the DC component of the first processed pilot signal provided from pilot processing circuit 70A to an output signal provided from multiplexer 728 and generate an output signal based on the comparison. According to an exemplary embodiment, comparator 726 includes an "A" terminal for receiving the DC component of the first processed pilot signal provided from pilot processing circuit 70A, and a "B" terminal for receiving the output signal provided from multiplexer 728. According to this exemplary embodiment, comparator 726 provides its output signal as a logical "1" value if the input to terminal "A" is greater than the input to terminal "B", and conversely, provides its output signal as a logical "0" value if the input to terminal "A" is not greater than the input to terminal "B".

Multiplexer 728 is operative to selectively output either a STEREO_ACQUIRE signal or a STEREO_RELEASE signal based on the logic state a control signal provided (i.e., fed back) from D-type flip-flop 730. According to an exemplary embodiment, the STEREO_ACQUIRE signal represents a threshold value set by an application circuit designer (or user) to indicate that stereo is present. Conversely, the STEREO_RELEASE signal represents a threshold value set by an application circuit designer (or user) to indicate that stereo is not present. The actual values used for the STEREO_ACQUIRE and STEREO_RELEASE signals may be a matter of design choice. According to this exemplary embodiment, multiplexer 728 outputs the STEREO_ACQUIRE signal if the control signal provided from D-type flip-flop 730 exhibits a logical "0" value, and conversely, outputs the STEREO_RELEASE signal if the control signal provided from D-type flip-flop 730 exhibits a logical "1" value.

D-type flip-flop 730 is operative to receive and output the output signal provided from comparator 726 in accordance with the applicable clock signal. As previously indicated herein, the output signal of D-type flip-flop 730 is fed back to multiplexer 728 as the control signal that controls whether multiplexer 728 outputs the STEREO_ACQUIRE signal or the STEREO_RELEASE signal. As indicated in FIG. 4, the output signal of D-type flip-flop 730 is also provided for further audio processing and output.

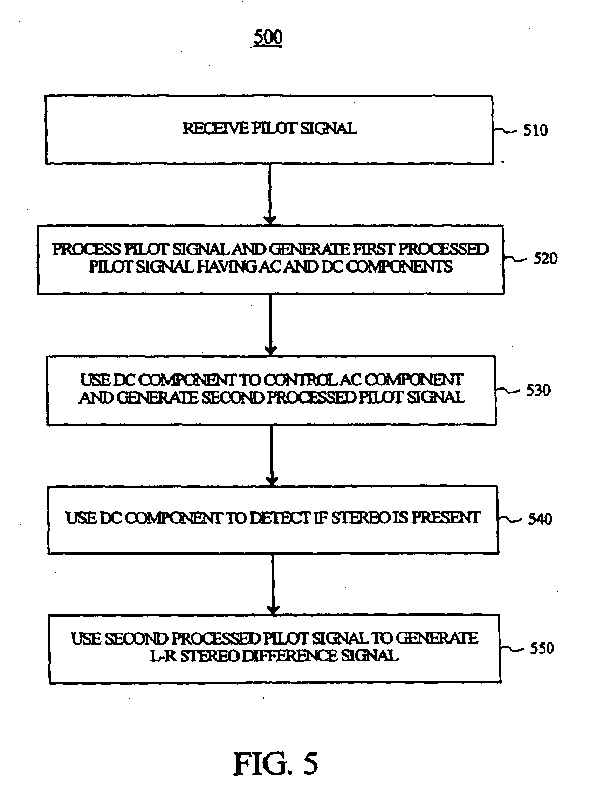

To facilitate a better understanding of the present invention, an example will now be provided. Referring now to FIG. 5, a flowchart 500 illustrating steps according to an exemplary embodiment of the present invention is shown. For purposes of example and explanation, the steps of FIG. 5 will be described with reference to various elements of apparatus 100 as previously described herein. The steps of FIG. 5 are merely exemplary, and are not intended to limit the present invention in any manner.

At step 510, a pilot signal received. According to an exemplary embodiment, the pilot signal is received as the output signal BPF 702 of FIG. 3, as previously described herein.

At step 520, the received pilot signal is processed to generate a first processed pilot signal having an AC component and a DC component. According to an exemplary embodiment, multiplier 704 generates the first processed pilot signal at step 520 by multiplying the pilot signal received at step 510 by itself (i.e., squaring the pilot signal). The first processed pilot signal generated at step 520 may be represented as A*cos(wt)² = A/2*(1+cos(2wt)), where A/2 represents the DC component and cos(2wt) represents the AC component.

At step 530, the DC component is used to control a signal parameter of the AC component and thereby generate a second processed pilot signal. According to an exemplary embodiment, delay unit 706, adder 708, and divider 710 of pilot processing circuit 70A of FIG. 3 operate as a comb filter that generates the DC component of the first processed pilot signal. Moreover, subtractor 712 of pilot processing circuit 70A generates the AC component of the first processed pilot signal by subtracting the DC component from the first processed pilot signal. Adder 714, divider 716, delay unit 718, multiplier 720, and LUT 722 of pilot processing circuit 70A further process the DC component of the first processed pilot signal. Multiplier 724 multiplies this processed version of the DC component with the AC component to thereby generate the second processed pilot signal at step 530.

At step 540, the DC component is used to detect if stereo is present. According to an exemplary embodiment, the DC component of the first processed pilot signal is provided to stereo detecting circuit 70B of FIG. 4 to enable the detection at step 540. Within stereo detecting circuit 70B, comparator 726 compares the DC component of the first processed pilot signal to either the STEREO_ACQUIRE signal or the STEREO_RELEASE signal output from multiplexer 728, as previously described herein, to thereby make the detection at step 540.

At step 550, the second processed pilot signal is used to generate an L-R stereo difference signal. According to an exemplary embodiment, the second processed pilot signal generated by multiplier 724 of pilot processing circuit 70A of FIG. 3 is provided to stereo difference processing block 72 of FIG. 2 to thereby enable generation of the L-R stereo difference signal at step 550. As previously indicated herein, stereo difference processing block 72 performs simple product demodulation by multiplying a 31.5 kHz signal with the second processed pilot signal to thereby generate the L-R stereo difference signal. Since gain/amplitude variations in the second processed pilot signal are controlled using the DC component of the first processed pilot signal, the present invention advantageously enables the L-R stereo difference signal to be properly generated using simple product demodulation.

As described herein, the present invention provides an apparatus and method for processing a pilot signal that enables, among other things, proper generation of an L-R stereo difference signal. The present invention may be particularly applicable to various apparatuses, either with or without an integrated display device. Accordingly, the phrase "television signal receiver" as used herein may refer to systems or apparatuses including, but not limited to, television sets, computers or monitors that include an integrated display device, and systems or apparatuses such as set-top boxes, video cassette recorders (VCRs), digital versatile disk (DVD) players, video game boxes, personal video recorders (PVRs), computers or other apparatuses that may not include an integrated display device.

## Claims

1. An audio signal receiving apparatus (100), provided with a pilot signal processing block (70) comprising:
means (702) for providing a pilot signal;
**characterized by**:
processing means (704-724) for processing said pilot signal to generate a first processed pilot signal having an AC component and a DC component; and
wherein said processing means (704-724) uses said DC component to control a signal parameter of said AC component and generate a second processed pilot signal.

2. The apparatus (100) of claim 1, further **characterized by** detecting means (70B) for using said DC component to detect if stereo is present.

3. The apparatus (100) of claim 1, further **characterized by** demodulating means (72) for performing a demodulation function using said second processed pilot signal to generate an L-R stereo difference signal.

4. The apparatus (100) of claim 3, wherein said demodulating means (72) uses simple product demodulation.

5. The apparatus (100) of claim 1, wherein said pilot signal is an audio pilot signal.

6. The apparatus (100) of claim 1, wherein said signal parameter is amplitude.

7. A method (500) for processing a pilot signal, in an audio signal receiving apparatus (100) comprising:
receiving a pilot signal (510);
**characterized by**:
processing said pilot signal to generate a first processed pilot signal having an AC component and a DC component (520); and
using said DC component to control a signal parameter of said AC component and generate a second processed pilot signal (530).

8. The method (500) of claim 7, further **characterized by** the step of using said DC component to detect if stereo is present (540).

9. The method (500) of claim 7, further **characterized by** the step of performing a demodulation function using said second processed pilot signal to generate an L-R stereo difference signal (550).

10. The method (500) of claim 9, wherein said demodulation function uses simple product demodulation.

11. The method (500) of claim 7, wherein said pilot signal is an audio pilot signal.

12. The method (500) of claim 7, wherein said signal parameter is amplitude.

## Patentansprüche

1. Vorrichtung zum Empfangen von Audio-Signalen (100), die mit einem Block zum Verarbeiten eines Pilotsignals (70) ausgestattet ist, umfassend:
ein Mittel (702) zum Bereitstellen eines Pilotsignals;
**gekennzeichnet durch**:
Verarbeitungsmittel (704-724) zum Verarbeiten des Pilotsignals, um ein erstes verarbeitetes Pilotsignal zu erzeugen, das eine Wechselstrom- und eine Gleichstromkomponente aufweist; und
wobei das Verarbeitungsmittel (704-724) die Gleichstromkomponente dazu verwendet, einen Signalparameter der Wechselstromkomponente zu regeln und ein zweites verarbeitetes Pilotsignal zu erzeugen.

2. Vorrichtung (100) gemäß Anspruch 1, ferner **gekennzeichnet durch** ein Erkennungsmittel (70B) zum Verwenden der Gleichstromkomponente für die Erkennung, ob ein Stereo-Signal vorliegt.

3. Vorrichtung (100) gemäß Anspruch 1, ferner **gekennzeichnet durch** ein Demodulationsmittel (72) zum Ausführen einer Demodulationsfunktion unter Verwendung des zweiten verarbeiteten Pilotsignals, um ein Stereo-Differenzsignal L-R zu erzeugen.

4. Vorrichtung (100) gemäß Anspruch 3, wobei das Demodulationsmittel (72) einfache Produktdemodulation verwendet.

5. Vorrichtung (100) gemäß Anspruch 1, wobei das Pilotsignal ein Audio-Pilotsignal ist.

6. Vorrichtung (100) gemäß Anspruch 1, wobei der Signalparameter die Amplitude ist.

7. Verfahren (500) zum Verarbeiten eines Pilotsignals in einer Vorrichtung zum Empfangen von Audio-Signalen (100), umfassend:
Empfangen eines Pilotsignals (510);
**gekennzeichnet durch**:
Verarbeiten des Pilotsignals, um ein erstes verarbeitetes Pilotsignal zu erzeugen, das eine Wechselstrom- und eine Gleichstromkomponente aufweist (520); und
Verwenden der Gleichstromkomponente, um einen Signalparameter der Wechselstromkomponente zu regeln und ein zweites verarbeitetes Pilotsignal (530) zu erzeugen.

8. Verfahren (500) gemäß Anspruch 7, ferner **gekennzeichnet durch** den Schritt, die Gleichstromkomponente für die Erkennung zu verwenden, ob ein Stereo-Signal vorliegt (540).

9. Verfahren (500) gemäß Anspruch 7, ferner **gekennzeichnet durch** den Schritt, unter Verwendung des zweiten verarbeiteten Pilotsignals eine Demodulationsfunktion auszuführen, um ein Stereo-Differenzsignal L-R zu erzeugen (550).

10. Verfahren (500) gemäß Anspruch 9, wobei die Demodulationsfunktion einfache Produktdemodulation verwendet.

11. Verfahren (500) gemäß Anspruch 7, wobei das Pilotsignal ein Audio-Pilotsignal ist.

12. Verfahren (500) gemäß Anspruch 7, wobei der Signalparameter die Amplitude ist.

## Revendications

1. Appareil (100) de réception de signaux audio, fourni avec un bloc (70) de traitement de signal pilote, comprenant :
un moyen (702) permettant de fournir un signal pilote ;
**caractérisé par** :
un moyen de traitement (704-724) permettant de traiter ledit signal pilote afin de générer un premier signal pilote traité possédant une composante CA et une composante CC ; et
où ledit moyen de traitement (704-724) utilise ladite composante CC pour commander un paramètre de signal de ladite composante CA et générer un deuxième signal pilote traité.

2. Appareil (100) selon la revendication 1, **caractérisé en outre par** un moyen de détection (70B) permettant d'utiliser ladite composante CC afin de détecter si une stéréo est présente.

3. Appareil (100) selon la revendication 1, **caractérisé en outre par** un moyen de démodulation (72) permettant d'exécuter une fonction de démodulation utilisant ledit signal pilote traité pour générer un signal de différence stéréo L-R.

4. Appareil (100) selon la revendication 3, où ledit moyen de démodulation (72) utilise une démodulation simple du produit.

5. Appareil (100) selon la revendication 1, où ledit signal pilote est un signal pilote audio.

6. Appareil (100) selon la revendication 1, où ledit paramètre de signal est l'amplitude.

7. Procédé (500) permettant de traiter un signal pilote, dans un appareil (100) de réception de signaux audio, comprenant :
la réception d'un signal pilote (510) ;
**caractérisé par** :
le traitement dudit signal pilote pour générer un premier signal pilote traité possédant une composante CA et une composante CC (520) ; et
l'utilisation de ladite composante CC pour commander un paramètre de signal de ladite composante CA et générer un deuxième signal pilote traité (530).

8. Dispositif (500) selon la revendication 7, **caractérisé en outre par** l'étape d'utilisation de ladite composante CC afin de détecter si une stéréo est présente (540).

9. Procédé (500) selon la revendication 7, **caractérisé en outre par** l'étape d'exécution d'une fonction de démodulation utilisant ledit deuxième signal pilote traité pour générer un signal de différence stéréo L-R.

10. Procédé (500) selon la revendication 9, où ladite fonction de démodulation utilise une démodulation simple du produit.

11. Procédé (500) selon la revendication 7, où ledit signal pilote est un signal pilote audio.

12. Procédé (500) selon la revendication 7, où ledit paramètre de signal est l'amplitude.
